Europäisches Patentamt

European Patent Office

Office européen des brevets

(19)

(11) **EP 0 657 723 B1**

(12) **FASCICULE DE BREVET EUROPEEN**

(45) Date de publication et mention
de la délivrance du brevet:
**08.10.1997 Bulletin 1997/41**

(51) Int Cl.6: **G01G 19/07**, G05D 1/00,
G01L 5/00

(21) Numéro de dépôt: **94402686.3**

(22) Date de dépôt: **24.11.1994**

(54) **Procédé et dispositif pour détecter un dépassement des charges de dimensionnement d'un aéronef**

Verfahren und Vorrichtung zum Bestimmen einer Lastdimensionierungsüberschreitung eines Flugzeuges

Method and apparatus for detecting a load dimensioning overrun of an aircraft

(84) Etats contractants désignés:
**DE ES GB IT NL**

(30) Priorité: **06.12.1993 FR 9314584**

(43) Date de publication de la demande:
**14.06.1995 Bulletin 1995/24**

(73) Titulaire: **AEROSPATIALE Société Nationale Industrielle**
**75781 Paris Cédex 16 (FR)**

(72) Inventeurs:
• **Delest, Thierry**
**F-31820 Pibrac (FR)**

• **Regis, Olivier**
**F-31000 Toulouse (FR)**
• **Schuster, Patrick**
**F-31100 Toulouse (FR)**

(74) Mandataire: **Bonnetat, Christian**
**CABINET BONNETAT**
**29, rue de St. Pétersbourg**
**75008 Paris (FR)**

(56) Documents cités:
WO-A-93/16359          DE-A- 3 620 888
GB-A- 2 014 731          US-A- 3 517 550
US-A- 3 712 122          US-A- 4 302 745

**Description**

La présente invention concerne un procédé et un dispositif pour détecter un dépassement des charges de dimensionnement d'un aéronef, en particulier d'un avion de transport civil, lors de l'atterrissage.

Par charges de dimensionnement, on entend, dans le cadre de la présente invention, les charges maximales que peut supporter la structure de l'aéronef sans qu'il y ait apparition de déformations permanentes.

Dans un but évident de sécurité, une inspection de la structure de l'aéronef, ainsi que la réparation d'éventuelles détériorations, doivent être effectuées, dès qu'il y a dépassement desdites charges de dimensionnement.

Une telle inspection est généralement déclenchée par le pilote, en fonction de ce qu'il a ressenti au moment de l'atterrissage, lorsqu'il juge que cet atterrissage a pu provoquer des dommages réels de la structure de l'aéronef. Toutefois, cette détection des dépassements de charges, basée sur les seules sensations personnelles du pilote, n'est évidemment guère fiable.

En effet, les réactions perçues au niveau du poste de pilotage traduisent souvent bien mal le niveau de charge réel appliqué sur l'ensemble de l'aéronef.

Ainsi, d'une part, des accélérations ressenties comme étant importantes sont souvent très inférieures aux valeurs que peut supporter sans dommage la structure de l'aéronef. De ce fait, un nombre important d'inspections, techniquement non justifiées, sont déclenchées par le pilote, ce qui entraîne une perte de temps et des dépenses superflues pénalisant lourdement la compagnie aérienne concernée.

D'autre part, des charges importantes peuvent être appliquées à la structure, sans toutefois provoquer des effets sensibles au niveau du poste de pilotage. Dans ce cas, aucune inspection n'est déclenchée bien que la structure ait pu être endommagée, ce qui peut alors entraîner des conséquences graves et irrémédiables lors de vols ultérieurs.

On remarquera qu'il existe de petits appareils qui sont destinés à être fixés à différents endroits de la structure de l'aéronef, par exemple sur le train d'atterrissage comme dans US-A-3 712 122, et qui signalent tout dépassement de l'accélération locale pour laquelle ils ont été étalonnés. Toutefois, de tels appareils ne sont sensibles qu'à des impulsions locales et ne permettent pas de couvrir l'ensemble de la structure de l'aéronef. De plus, l'étalonnage de ces appareils est très difficile.

Par ailleurs, on connaît des dispositifs destinés à comparer, pour un certain nombre de paramètres, comme la vitesse verticale ou l'accélération du centre de gravité, la valeur effective mesurée lors de l'atterrissage à une valeur admissible prédéfinie et enregistrée dans un calculateur.

Toutefois, les paramètres mesurés sont en nombre limité et n'indiquent qu'imparfaitement le niveau de charge réel. De plus, de tels dispositifs ne permettent pas d'effectuer une surveillance globale et fiable de toute la structure de l'aéronef, car ils ne tiennent pas compte en particulier des différents comportements dynamiques existants. En outre, la cadence de mesure des paramètres considérés doit être extrêmement élevée pour permettre d'enregistrer tous les maxima susceptibles d'apparaître.

Par conséquent, les techniques connues mentionnées précédemment ne permettent pas d'assurer une protection suffisante de la structure de l'aéronef ou pénalisent les compagnies aériennes par un nombre trop important d'inspections structurales non justifiées techniquement.

Aussi, l'objet de l'invention est de détecter tout dépassement des charges de dimensionnement de l'aéronef, en ne se contentant pas d'informations partielles, localisées et non corrélées entre elles, mais en recherchant le niveau de charge réellement atteint.

A cette fin, selon l'invention, le procédé pour détecter un dépassement des charges de dimensionnement d'un aéronef lors de l'atterrissage, nécessitant le déclenchement d'une inspection structurale dudit aéronef, est remarquable en ce que :

- dans une étape préliminaire :

    . on définit des critères de charge mesurables sur l'aéronef et représentatifs des charges effectives auxquelles est soumis l'aéronef ; et
    . on détermine des lois d'évolution des valeurs admissibles de ces critères de charge, en fonction de paramètres d'entrée mesurables sur l'aéronef ; et

- au moment de l'atterrissage :

    . on mesure les valeurs desdits paramètres d'entrée et desdits critères de charge ;
    . on calcule, à partir desdites lois d'évolution et desdites valeurs mesurées des paramètres d'entrée, les valeurs admissibles desdits critères de charge ;
    . on compare, pour chacun desdits critères de charge, la valeur effective mesurée à la valeur admissible calculée ; et
    . à partir du résultat des différentes comparaisons, on détermine si une inspection structurale doit être effectuée.

Ainsi, grâce à l'invention, on obtient une surveillance de la structure de l'aéronef basée sur une évaluation objective du niveau de charge. En effet, cette surveillance est fondée sur la comparaison des valeurs réelles mesurées au moment de l'impact et des valeurs admissibles calculées, desdits critères de charges, lesdits critères de charge étant représentatifs des charges effectives auxquelles est soumis l'aéronef.

Par ailleurs, on détermine, de façon avantageuse, à partir du résultat des différentes comparaisons, le type d'inspection à effectuer.

Ainsi, grâce à l'invention, on est non seulement en mesure de savoir si une inspection structurale doit être effectuée, mais on est également en mesure de préciser, en fonction des mesures faites à l'atterrissage et des calculs correspondants, les parties de l'aéronef devant être vérifiées, ce qui évite d'avoir à inspecter toute la structure de l'aéronef lorsqu'une inspection est nécessaire.

De façon avantageuse, selon le type d'inspection structurale à effectuer, on vérifie une ou plusieurs des parties suivantes de l'aéronef : le train d'atterrissage avant, le train d'atterrissage principal, le train d'atterrissage central, les ailes, le fuselage et les mâts réacteurs.

Il est évident que, selon l'utilisation et la portée envisagées de l'invention, d'autres parties que celles mentionnées précédemment peuvent être prises en compte par le procédé conforme à l'invention pour être soumises à une éventuelle inspection.

Le type d'inspection à effectuer est choisi en fonction des critères de charge ayant dépassé les valeurs admissibles correspondantes, ainsi qu'en fonction de la valeur atteinte par ces critères de charge lors de l'atterrissage. Ainsi, un même critère de charge qui a dépassé la valeur prescrite peut, selon qu'il est le seul critère de charge ou non dans cette situation, et, le cas échéant, selon la nature des autres critères de charge incriminés, exiger des types d'inspection différents, préalablement définis.

Selon l'invention, pour déterminer la loi d'évolution des valeurs admissibles d'un critère de charge en fonction d'un paramètre d'entrée, on recherche pour différentes valeurs dudit paramètre d'entrée la valeur admissible correspondante du critère de charge, en effectuant pour chacune desdites différentes valeurs du paramètre d'entrée les étapes suivantes :

a) on choisit une valeur supposée du critère de charge ;
b) on introduit ladite valeur supposée du critère de charge et ladite valeur du paramètre d'entrée dans un modèle d'atterrissage ;
c) à l'aide de ce modèle d'atterrissage, on détermine les charges effectives auxquelles est soumis l'aéronef ;
d) on compare ces charges effectives déterminées aux charges limites de dimensionnement ; et
e) si lesdites charges sont égales, on définit ladite valeur supposée du critère de charge comme valeur admissible, correspondant à ladite valeur du paramètre d'entrée ;
sinon, on reprend les étapes a) à e) en choisissant une valeur supposée du critère de charge différente.

Par conséquent, en connaissant, pour un certain nombre de valeurs du paramètre d'entrée, la valeur admissible correspondante du critère de charge, on est en mesure de représenter la variation de la valeur admissible en fonction du paramètre d'entrée et de rechercher une loi d'évolution mathématique qui reproduit cette variation.

Par exemple, la loi d'évolution des valeurs admissibles Ciad d'un critère de charge Ci, en fonction d'un paramètre d'entrée Pi, peut être de la forme

$$Ciad = a3Pi^3 + a2Pi^2 + a1Pi + a0$$

expression dans laquelle a0, a1, a2 et a3 représentent des coefficients constants.

Par ailleurs, pour déterminer la loi d'évolution des valeurs admissibles d'un critère de charge, en fonction de plusieurs paramètres d'entrée, on recherche pour différentes combinaisons de valeurs desdits paramètres d'entrée la valeur admissible correspondante du critère de charge, en effectuant, pour chacune desdits combinaisons, les étapes a) à e) précédentes, pour lesquelles on introduit à chaque fois dans le modèle d'atterrissage les valeurs choisies de tous lesdits paramètres d'entrée.

Pour un critère de charge Cj dépendant de plusieurs paramètres d'entrée P1, P2, ..., Pn, la loi d'évolution des valeurs admissibles Cjad peut, par exemple, être de la forme

$$Cjad = b1P1 + b2P2 + ... + bnPn$$

expression dans laquelle b1, b2, ..., bn représentent des coefficients constants.

De préférence, comme paramètres d'entrée, on utilise au moins certains desdits paramètres suivants : la masse de l'aéronef, le centre de gravité de l'aéronef, l'accélération au moment de l'atterrissage, l'accélération maximale enregistrée au cours de l'atterrissage, l'assiette de l'avion, la vitesse d'abattée et la vitesse de roulis.

L'échantillonnage et le filtrage des paramètres utilisés sont tels que tous les pics de ces paramètres sont pris en compte. Ainsi, il devient impossible, par exemple, qu'une contrainte locale très brève mais de forte intensité, qui risque de provoquer des dommages importants dans la structure de l'aéronef, ne soit pas décelée et ne soit pas intégrée dans le calcul.

De façon avantageuse, comme critères de charge, on utilise au moins certains desdits critères suivants : la vitesse verticale, l'accélération verticale, l'accélération latérale et la charge verticale sur le train avant.

Pour la mise en oeuvre du procédé conforme à l'invention, on prévoit avantageusement un dispositif embarqué qui comporte :

- un premier ensemble de capteurs destinés à mesurer les valeurs desdits paramètres d'entrée ;

- un second ensemble de capteurs destinés à mesurer les valeurs desdits critères de charge ;
- un calculateur relié audit premier ensemble de capteurs, comportant les lois d'évolution des valeurs admissibles des critères de charge, recevant les valeurs mesurées des paramètres d'entrée et déterminant les valeurs admissibles correspondantes des critères de charge ; et
- un dispositif de comparaison, relié audit second ensemble de capteurs et audit calculateur, comparant pour chaque critère de charge la valeur effective mesurée à la valeur admissible calculée, déterminant à partir desdites comparaisons si une inspection structurale doit être effectuée et communiquant, le cas échéant, le type d'inspection structurale à effectuer.

Ledit dispositif de comparaison fournit donc à sa sortie des signaux représentatifs du résultat de cette détermination, lesdits signaux pouvant être utilisés à des fins de visualisation ou être transmis à d'autres systèmes, par exemple à un dispositif d'enregistrement sur papier ou sur disque pour enregistrer le résultat en vue d'une utilisation ultérieure, ou à un dispositif émetteur pour transmettre directement le résultat à des opérateurs se trouvant au sol.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 illustre un dispositif logique utilisé dans l'élaboration de lois d'évolution des valeurs admissibles de critères de charge.

La figure 3 illustre un dispositif logique utilisé par un dispositif de comparaison pour l'analyse de résultats.

La figure 4 illustre un dispositif logique perfectionnant le dispositif logique de la figure 3.

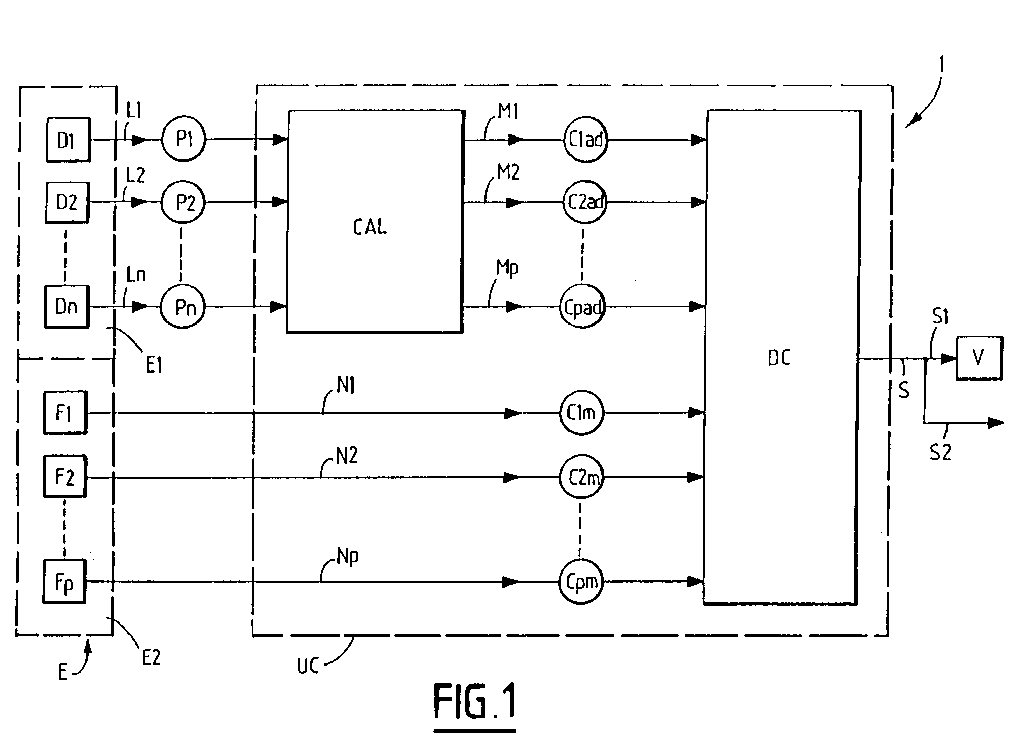

Le dispositif 1, conforme à l'invention et représenté sur la figure 1, est destiné à être embarqué à bord d'un aéronef pour détecter tout dépassement des valeurs de dimensionnement dudit aéronef lors de l'atterrissage.

A cet effet, ledit dispositif 1 comporte un premier ensemble E1 de capteurs D1 à Dn. Lesdits capteurs D1, D2, ..., Dn sont reliés, respectivement par l'intermédiaire de liaisons L1, L2, ..., Ln, à un calculateur CAL. Ils mesurent, au moment de l'atterrissage, des paramètres d'entrée P1, P2, ..., Pn qu'ils transmettent audit calculateur CAL.

Dans un but de clarification du dessin, on a représenté sur la figure 1 les informations transmises par les différentes liaisons en traçant des cercles sur ces liaisons et en inscrivant lesdites informations dans ces cercles, comme par exemple pour les paramètres d'entrée P1, P2, ..., Pn transmis par les liaisons L1, L2, ..., Ln.

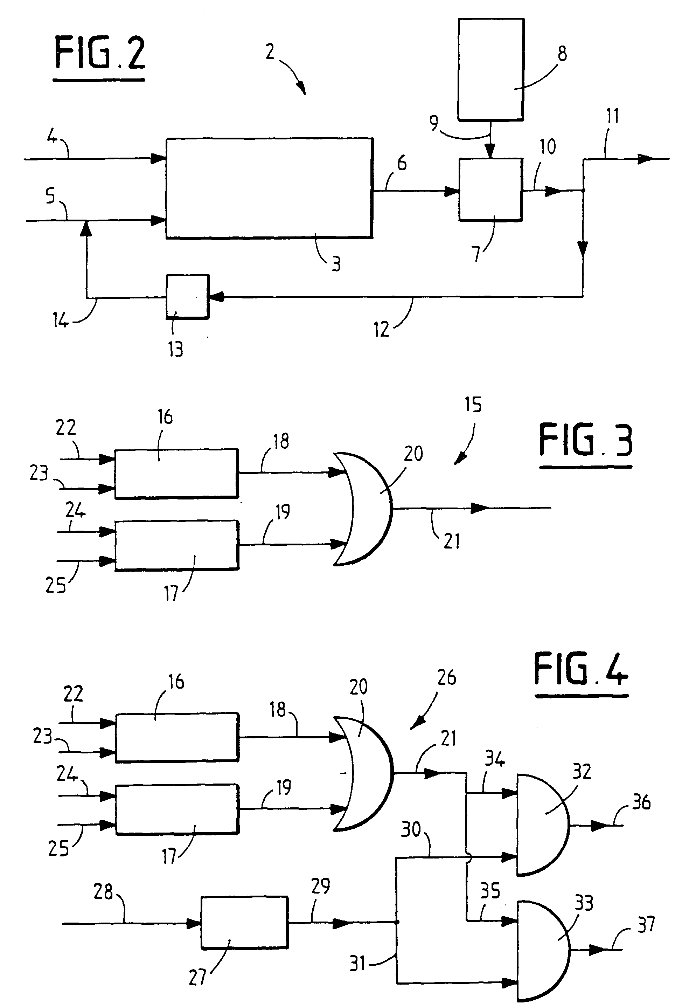

Ledit calculateur CAL calcule, à partir desdits paramètres d'entrée P1 à Pn et à partir de lois d'évolution qu'il a en mémoire, les valeurs admissibles C1ad, C2ad, ..., Cpad de critères de charges C1, C2, ..., Cp qui sont représentatifs des charges auxquelles est soumis l'aéronef. On expliquera ci-après, en référence à la figure 2, le mode d'élaboration desdites lois d'évolution.

Ce calculateur CAL peut être analogique ou numérique. Il peut être programmé séquentiellement ou par les techniques de l'intelligence artificielle.

Ledit calculateur CAL transmet lesdites valeurs admissibles C1ad, C2ad, ..., Cpad à un dispositif de comparaison DC, respectivement par l'intermédiaire de liaisons M1, M2, ..., Mp.

Ledit dispositif de comparaison DC reçoit, en outre, les valeurs effectives C1m, C2m, ..., Cpm desdits critères de charge C1, C2, ..., Cp mesurées, au moment de l'atterrissage, par un second ensemble E2 de capteurs F1, F2, ..., Fp et transmises par des liaisons N1, N2, ..., Np.

Lesdits capteurs D1 à Dn et F1 à Fp sont généralement des dispositifs existant déjà à bord de l'aéronef, ce qui évite d'avoir à effectuer des agencements particuliers pour la mise en oeuvre de l'invention et limite ainsi le coût du dispositif 1. Généralement, ces capteurs sont de simples dispositifs de mesure mesurant directement la valeur effective des paramètres utilisés dans l'invention. Cependant, il peut également s'agir d'autres sources d'informations, comme par exemple des calculateurs présents à bord de l'aéronef et destinés initialement à un autre usage. Comme les différents capteurs des premier E1 et second E2 ensembles de capteurs sont de même nature, on regroupe tous lesdits capteurs D1 à Dn et F1 à Fp en un unique ensemble E.

Ledit dispositif de comparaison DC compare pour chaque critère de charge C1, C2, ..., Cp la valeur admissible calculée C1ad, C2ad, ..., Cpad à la valeur mesurée C1m, C2m, ..., Cpm. En fonction des résultats des différentes comparaisons, ledit dispositif de comparaison DC détermine si une inspection structurale doit être effectuée et, le cas échéant, le type d'inspection à effectuer. On expliquera ci-après, en référence aux figures 3 et 4, la prise en compte des résultats de ces différentes comparaisons dans la détermination du type d'inspection à effectuer éventuellement.

Ledit dispositif de comparaison DC délivre à sa sortie S des signaux représentatifs du type d'inspection devant être éventuellement effectué, qui peut être affiché, par l'intermédiaire d'une liaison S1, sur un dispositif d'affichage V et/ou être transmis, par l'intermédiaire d'une liaison S2, à d'autres systèmes utilisateurs (non représentés), comme par exemple un dispositif d'enregistrement sur papier ou sur disque ou un dispositif émetteur qui permet de transmettre directement le résultat à des opérateurs se trouvant au sol.

Ledit dispositif de comparaison DC et ledit calculateur CAL sont regroupés en une unité centrale UC.

Par définition, tel que mentionné précédemment, les critères de charges C1, C2, ..., Cp sont représentatifs des charges effectives auxquelles est soumis l'aéronef et leurs valeurs admissibles C1ad, C2ad, ..., Cpad sont déterminées à partir desdits paramètres d'entrée P1, P2, ..., Pn.

Conformément à l'invention, pour déterminer la loi d'évolution de la valeur admissible Ciad d'un critère de charge Ci, en fonction d'un paramètre d'entrée Pi, on recherche, pour différentes valeurs $\hat{P}i$ dudit paramètre d'entrée Pi, la valeur admissible correspondante Ciad du critère de charge Ci, à partir du dispositif logique 2 de la figure 2. Puis, à partir des différents couples Ciad/$\hat{P}i$ ainsi déterminés, on déduit la loi d'évolution correspondante.

Ledit dispositif logique 2 comporte un calculateur 3 à deux entrées reliées respectivement à des liaisons 4 et 5, et à une sortie. Cette dernière est reliée, par l'intermédiaire d'une liaison 6, à une entrée d'un comparateur 7 à double entrée. A l'autre entrée dudit comparateur 7, est raccordée une mémoire 8, par l'intermédiaire d'une liaison 9. Ledit comparateur 7 compare, entre elles, les informations fournies respectivement par ledit calculateur 3 et par ladite mémoire 8 et il délivre à sa sortie, par une liaison 10, l'une de deux réponses, en fonction du résultat de cette comparaison.

A cet effet, la liaison 10 est dédoublée en deux liaisons 11 et 12 respectivement associées à l'une ou l'autre desdites réponses possibles.

Si le résultat est positif, c'est-à-dire lorsque les deux valeurs comparées sont égales, en tenant évidemment compte d'une certaine marge prédéfinie, le comparateur 7 fournit à la sortie, par l'intermédiaire de la liaison 11, les valeurs initialement introduites par les liaisons 4 et 5 dans le calculateur 3 et le fonctionnement du dispositif logique est arrêté.

Au contraire, si le résultat est négatif, c'est-à-dire lorsque la différence entre les valeurs comparées dépasse une marge prédéfinie, ledit comparateur 7 informe un calculateur 13 par l'intermédiaire de la liaison 12. Ledit calculateur 13 introduit alors une nouvelle valeur dans le calculateur 3, par l'intermédiaire d'une liaison 14 reliée à la liaison 5.

Le dispositif logique 2 est ainsi réalisé en boucle et il poursuit ses calculs, de façon continue, jusqu'à l'obtention d'une égalité dans le comparateur 7.

Pour déterminer la valeur admissible Ciad d'un critère de charge Ci ne dépendant que d'un seul paramètre Pi, qui est associée à une valeur déterminée $\hat{P}i$ dudit paramètre Pi, on introduit dans le calculateur 3 ladite valeur $\hat{P}i$ par l'intermédiaire de la liaison 4, ainsi qu'une valeur supposée Cith dudit critère de charge Ci par l'intermédiaire de la liaison 5.

Ledit calculateur 3 comporte un modèle théorique d'atterrissage tenant compte des caractéristiques de l'aéronef, ce qui permet d'adapter avantageusement l'invention au type d'aéronef utilisé.

Le calculateur 3 calcule, à partir des informations introduites et dudit modèle d'atterrissage, la charge à laquelle est soumise l'aéronef dans ces conditions et il transmet le résultat au comparateur 7 qui compare, alors, cette valeur calculée de la charge à la charge limite que l'aéronef peut supporter, déterminée à partir du dimensionnement de l'aéronef et enregistrée dans la mémoire 8.

Lorsque les deux charges sont égales, en tenant compte d'une marge prédéfinie, ledit comparateur 7 transmet, à sa sortie, par la liaison 11, la valeur supposée Cith du critère Ci introduite initialement dans le calculateur 3.

Cette valeur Cith est alors définie comme valeur admissible Ciad associée à la valeur $\hat{P}i$ du paramètre d'entrée Pi.

Au contraire, lorsque la charge calculée à partir du modèle d'atterrissage ne correspond pas à la charge limite, le comparateur 7 en informe le calculateur 13 qui modifie la valeur supposée Cith du critère de charge, en l'augmentant ou en la diminuant suivant le résultat de la comparaison, et introduit la nouvelle valeur ainsi déterminée dans le calculateur 3 par les liaisons 14 et 5, la valeur $\hat{P}i$ du paramètre d'entrée Pi introduite par la liaison 4 restant inchangée.

Ledit dispositif logique 2 répète les étapes précédentes, en boucle, jusqu'à obtenir une égalité dans le comparateur 7, c'est-à-dire jusqu'à obtenir la valeur admissible Ciad du critère de charge Ci qui est associée à la valeur $\hat{P}i$ du paramètre d'entrée Pi.

On remarquera que l'on peut utiliser le même dispositif logique 2 pour déterminer la valeur admissible du critère de charge pour laquelle la charge effective ne correspond pas à la charge limite de dimensionnement, mais à un certain pourcentage, par exemple 80%, de cette charge limite de dimensionnement. Il suffit, pour cela, de modifier en conséquence la valeur de la charge enregistrée dans la mémoire 8.

A partir des différents couples Ciad/$\hat{P}i$ ainsi obtenus, on détermine la variation de Ciad en fonction de Pi et on recherche une loi d'évolution théorique reproduisant cette variation.

A titre d'exemple, une loi d'évolution possible est de la forme

$$Ciad = a3Pi^3 + a2Pi^2 + a1Pi + a0$$

expression dans laquelle $a_0$, $a_1$, $a_2$ et $a_3$ représentent des coefficients caractéristiques des performances et des valeurs de dimensionnement de l'aéronef.

Lorsqu'un critère de charge Cj est défini à partir de plusieurs paramètres d'entrée P1 à Pn, on utilise également le dispositif logique 2 pour déterminer la loi d'évolution des valeurs admissibles Cjad de ce critère de charge Cj en fonction desdits paramètres d'entrée P1 à Pn.

Par ledit dispositif logique 2, on détermine, dans un tel cas, la valeur admissible Cjad associée à une combinaison déterminée de valeurs $\hat{P}1$ à $\hat{P}n$ desdits paramètres d'entrée P1 à Pn.

Dans ce cas, à titre d'exemple, une loi d'évolution déterminée est de la forme

$$Cjad = a1P1 + a2P2 + ... + anPn$$

a1, a2, ..., an représentant des coefficients caractéristiques.

Comme décrit précédemment, le dispositif de comparaison DC (voir figure 1) compare, pour chacun desdits critères de charge C1, C2, ..., Cp, la valeur admissible C1ad, C2ad, ..., Cpad calculée par le calculateur CAL à l'aide de lois d'évolution, telles que celles décrites précédemment, à la valeur effective C1m, C2m, ..., Cpm mesurée au moment de l'atterrissage par le second ensemble E2 de capteurs et il en déduit, à partir de l'analyse de ces différentes comparaisons, si une inspection structurale doit être effectuée. Il utilise, à cet effet, un dispositif logique 15 représenté sur la figure 3.

Ledit dispositif logique 15 comporte deux comparateurs 16 et 17 à double entrée et à une sortie chacun. Les sorties respectives desdits comparateurs 16 et 17 sont reliées, par l'intermédiaire de liaisons 18 et 19, aux deux entrées d'une porte logique OU 20, la sortie de cette porte logique OU 20 étant reliée à une liaison 21.

Lorsque la sortie de ladite porte logique OU 20 est activée, c'est-à-dire lorsque la liaison 21 transmet un signal, une inspection structurale est à effectuer.

Suivant les informations introduites dans le comparateur 16 par des liaisons 22 et 23 reliées à ses entrées, ainsi que suivant celles introduites dans le comparateur 17 par des liaisons 24 et 25 reliées aux entrées de ce dernier, on peut même déterminer, de plus, le type d'inspection structurale à effectuer, c'est-à-dire que l'on peut préciser les parties de l'aéronef à inspecter.

A titre d'exemple, on peut entrer dans le comparateur 16, d'une part, la valeur admissible Nzad de l'accélération verticale Nz calculée à partir de paramètres d'entrée et, d'autre part, la valeur effective Nzm mesurée au moment de l'atterrissage, et on peut entrer dans le comparateur 17 respectivement les valeurs admissibles et mesurées de l'accélération latérale Ny.

Lesdits comparateurs 16 et 17 sont programmés pour délivrer à leur sortie un signal, à chaque fois que la valeur mesurée entrée est supérieure à la valeur admissible entrée.

Ainsi, puisque la porte logique OU 20 délivre un signal à sa sortie, ordonnant le déclenchement d'une inspection structurale, dès que l'une de ses entrées est activée, une inspection structurale est à effectuer, dans cet exemple, si l'une des accélérations latérale ou verticale dépasse sa valeur admissible.

A partir d'un autre dispositif logique 26 représenté sur la figure 4, intégrant et perfectionnant le dispositif logique 15 de la figure 3, on est en mesure de préciser davantage encore les parties de l'aéronef devant être inspectées.

Ledit dispositif logique 26 comporte, en plus du dispositif logique 15, un comparateur 27 muni d'une liaison d'entrée 28 et d'une liaison de sortie 29 qui se divise en deux liaisons 30 et 31, dont l'une seule est à chaque fois activée en fonction de la réponse du comparateur 27. Si la réponse est affirmative, la liaison 30 est activée, cette dernière liaison étant reliée à une porte logique ET 32. Au contraire, si la réponse est négative, la liaison 31 est activée, cette dernière liaison étant reliée à une porte logique ET 33.

Les deux autres entrées desdites portes logiques ET 32 et 33 sont respectivement reliées à deux liaisons 34 et 35 obtenues par le dédoublement de la liaison 21 du dispositif logique 15.

Les sorties des portes logiques ET 32 et 33 sont respectivement reliées à des liaisons 36 et 37. Elles sont, en outre, associées chacune à un type différent d'inspection structurale à effectuer. Ainsi, selon que l'une ou l'autre des liaisons 36,37 transmet un signal, l'un ou l'autre desdits types d'inspection correspondants doit être pris en compte.

Selon un exemple particulier vérifié en pratique, dans le cas où on introduit dans le dispositif logique 26 :

-   par la liaison 22, la valeur mesurée Vzm de la vitesse verticale Vz de l'aéronef, et par la liaison 23, la valeur admissible Vzad1 de la vitesse verticale Vz, calculée à partir d'une première loi d'évolution, lorsque l'accélération verticale Nz est supérieure à 1 g, $\underline{g}$ représentant l'accélération de la pesanteur,
-   par la liaison 24, la valeur Vzm, et par la liaison 25, la valeur admissible Vzad2 de la vitesse verticale Vz, calculée à partir d'une seconde loi d'évolution, lorsque l'accélération verticale Nz est inférieure à 1 g, et
-   le tangage Θ par la liaison 28, le comparateur 27 comparant la valeur de Θ (exprimée en °) à une valeur enregistrée valant 4°,

on doit inspecter sur l'aéronef :

-   les trains d'atterrissage central et principal et les mâts réacteurs, si la liaison 36 est activée ; ou
-   le train d'atterrissage principal, les ailes et les mâts réacteurs, si la liaison 37 est activée.

## Revendications

1.  Procédé pour détecter un dépassement des charges de dimensionnement d'un aéronef lors de l'atterrissage, nécessitant le déclenchement d'une inspection structurale dudit aéronef, caractérisé en ce que :

    -   dans une étape préliminaire :

        .   on définit des critères de charge (C1, C2, ..., Cp) mesurables sur l'aéronef et représentatifs des charges effectives auxquelles est soumis l'aéronef ; et

. on détermine des lois d'évolution des valeurs admissibles (C1ad, C2ad, ..., Cpad) de ces critères de charge (C1, C2, ..., Cp), en fonction de paramètres d'entrée (P1, P2, ..., Pn) mesurables sur l'aéronef ; et

- au moment de l'atterrissage :

. on mesure les valeurs desdits paramètres d'entrée (P1, P2, ..., Pn) et desdits critères de charge (C1, C2, ..., Cp) ;

. on calcule, à partir desdites lois d'évolution et desdites valeurs mesurées des paramètres d'entrée, les valeurs admissibles (C1ad, C2ad, ..., Cpad) desdits critères de charge (C1, C2, ..., Cp) ;

. on compare, pour chacun desdits critères de charge (C1, C2, ..., Cp), la valeur effective mesurée (C1m, C2m, ..., Cpm) à la valeur admissible calculée (C1ad, C2ad, ..., Cpad) ; et

. à partir du résultat des différentes comparaisons, on détermine si une inspection structurale doit être effectuée.

2. Procédé selon la revendication 1,
caractérisé en ce que, à partir du résultat des différentes comparaisons, on détermine le cas échéant le type d'inspection structurale à effectuer.

3. Procédé selon la revendication 2,
caractérisé en ce que, selon le type d'inspection structurale à effectuer, on vérifie une ou plusieurs des parties suivantes de l'aéronef : le train d'atterrissage avant, le train d'atterrissage principal, le train d'atterrissage central, les ailes, le fuselage et les mâts réacteurs.

4. Procédé selon l'une des revendications 1 à 3,
caractérisé en ce que, pour déterminer la loi d'évolution des valeurs admissibles (Ciad) d'un critère de charge (Ci) en fonction d'un paramètre d'entrée (Pi), on recherche pour différentes valeurs dudit paramètre d'entrée (Pi) la valeur admissible correspondante (Ciad) du critère de charge, en effectuant pour chacune desdites différentes valeurs du paramètre d'entrée les étapes suivantes :

a) on choisit une valeur supposée du critère de charge ;
b) on introduit ladite valeur supposée du critère de charge et ladite valeur du paramètre d'entrée dans un modèle d'atterrissage ;
c) à l'aide de ce modèle d'atterrissage, on détermine les charges effectives auxquelles est soumis l'aéronef ;

d) on compare ces charges effectives déterminées aux charges limites de dimensionnement ; et
e) si lesdites charges sont égales, on définit ladite valeur supposée du critère de charge comme valeur admissible, correspondant à ladite valeur du paramètre d'entrée ;
sinon, on reprend les étapes a) à e) en choisissant une valeur supposée du critère de charge différente.

5. Procédé selon la revendication 4,
caractérisé en ce que la loi d'évolution des valeurs admissibles (Ciad) d'un critère de charge (Ci), en fonction d'un paramètre d'entrée (Pi), est de la forme

$$Ciad = a3Pi^3 + a2Pi^2 + a1Pi + a0$$

expression dans laquelle a0, a1, a2 et a3 représentent des coefficients constants.

6. Procédé selon la revendication 4,
caractérisé en ce que, pour déterminer la loi d'évolution des valeurs admissibles (Cjad) d'un critère de charge (Cj), en fonction de plusieurs paramètres d'entrée (P1, P2, ..., Pn), on recherche pour différentes combinaisons de valeurs desdits paramètres d'entrée (P1, P2, ..., Pn) la valeur admissible (Cjad) correspondante du critère de charge (Cj), en effectuant, pour chacune desdits combinaisons, lesdites étapes a) à e), pour lesquelles on introduit à chaque fois dans le modèle d'atterrissage les valeurs choisies de tous lesdits paramètres d'entrée (P1, P2, ..., Pm).

7. Procédé selon la revendication 6,
caractérisé en ce que la loi d'évolution des valeurs admissibles (Cjad) d'un critère de charge (Cj), en fonction de paramètres d'entrée (P1, P2, ..., Pn), est de la forme

$$Cjad = b1P1 + b2P2 + ... + bnPn$$

expression dans laquelle b1, b2, ..., bn représentent des coefficients constants.

8. Procédé selon l'une des revendications 1 à 7,
caractérisé en ce que, comme paramètres d'entrée (P1, P2, ..., Pn), on utilise au moins certains desdits paramètres suivants : la masse de l'aéronef, le centre de gravité de l'aéronef, l'accélération au moment de l'atterrissage, l'accélération maximale enregistrée au cours de l'atterrissage, l'assiette de l'avion, la vitesse d'abattée et la vitesse de roulis.

9. Procédé selon l'une des revendications 1 à 8, caractérisé en ce que, comme critères de charge (C1, C2, ..., Cp), on utilise au moins certains desdits critères suivants : la vitesse verticale, l'accélération verticale, l'accélération latérale et la charge verticale sur le train avant.

10. Dispositif (1) pour la mise en oeuvre du procédé spécifié sous l'une des revendications 1 à 9, caractérisé en ce qu'il comporte :

   - un premier ensemble (E1) de capteurs (D1, D2, ..., Dn) destinés à mesurer les valeurs desdits paramètres d'entrée (P1, P2, ..., Pn) ;
   - un second ensemble (E2) de capteurs (F1, F2, ..., Fp) destinés à mesurer les valeurs (C1m, C2m, ..., Cpm) desdits critères de charge (C1, C2, ..., Cp) ;
   - un calculateur (CAL) relié audit premier ensemble (E1) de capteurs, comportant les lois d'évolution des valeurs admissibles des critères de charge, recevant les valeurs mesurées des paramètres d'entrée (P1, P2, ..., Pn) et déterminant les valeurs admissibles (C1ad, C2ad, ..., Cpad) correspondantes des critères de charge (C1, C2, ..., Cp) ; et
   - un dispositif de comparaison (DC), relié audit second ensemble (E2) de capteurs et audit calculateur (CAL), comparant pour chaque critère de charge (C1, C2, ..., Cp) la valeur effective mesurée (C1m, C2m, ..., Cpm) à la valeur admissible calculée (C1ad, C2ad, ..., Cpad), déterminant à partir desdites comparaisons si une inspection structurale doit être effectuée et communiquant, le cas échéant, le type d'inspection structurale à effectuer.

**Patentansprüche**

1. Verfahren zur Erfassung einer Lastdimensionierungsüberschreitung eines Luftfahrzeugs bei der Landung, die eine Strukturinspektion des Luftfahrzeugs erforderlich macht, dadurch gekennzeichnet, daß:

   - in einer Vorstufe:

     . am Luftfahrzeug meßbare Belastungskriterien (C1, C2, ..., Cp), die für die tatsächlichen Belastungen des Luftfahrzeugs repräsentativ sind, festgelegt werden und
     . Entwicklungsgesetze der zulässigen Werte (C1ad, C2ad, ..., Cpad) dieser Belastungskriterien (C1, C2, ..., Cp) in Abhängigkeit von am Luftfahrzeug meßbaren Eingabeparametern (P1, P2, ..., Pn) bestimmt werden und

   - bei der Landung:

     . die Werte der Eingabeparameter (P1, P2, ..., Pn) und der Belastungskriterien (C1, C2, ..., Cp) gemessen werden;
     . aus den Entwicklungsgesetzen und den Meßwerten der Eingabeparamener die zulässigen Werte (C1ad, C2ad, ..., Cpad) der Belastungskriterien (C1, C2, ..., Cp) errechnet werden;
     . für jedes Belastungskriterium (C1, C2, ..., Cp) der tatsächliche Meßwert (C1m, C2m, ..., Cpm) mit dem errechneten zulässigen Wert (C1ad, C2ad, ..., Cpad) verglichen wird, und
     . nach dem Ergebnis der verschiedenen Vergleiche bestimmt wird, ob eine Strukturinspektion durchzuführen ist.

2. Verfahren nach Anspruch 1, dadurch gekennzeichnet, daß nach dem Ergebnis der verschiedenen Vergleiche gegebenenfalls die Art der durchzuführenden Strukturinspektion bestimmt wird.

3. Verfahren nach Anspruch 2, dadurch gekennzeichnet, daß entsprechend der Art der durchzuführenden Strukturinspektion eines oder mehrere der folgenden Teile des Luftfahrzeugs überprüft werden: Bugfahrwerk, Hauptfahrwerk, mittleres Fahrwerk, Flügel, Rumpf und Strahltriebwerksträger.

4. Verfahren nach einem der Verfahren 1 bis 3, dadurch gekennzeichnet, daß zur Bestimmung des Entwicklungsgesetzes der zulässigen Werte (Ciad) eines Belastungskriteriums (Ci) in Abhängigkeit von einem Eingabeparameter (Pi) für verschiedene Werte des Eingabeparameters (Pi) der entsprechende zulässige Wert (Ciad) des Belastungskriteriums ermittelt wird, indem für jeden der verschiedenen Werte des Eingabeparameters folgende Schritte durchgeführt werden:

   a) Wahl eines angenommenen Wertes des Belastungskriteriums;
   b) Eingabe des angenommenen Wertes des Belastungskriteriums und des Wertes des Eingabeparameters in ein Landemodell;
   c) mit Hilfe dieses Landemodells Bestimmung der tatsächlichen Belastungen des Luftfahrzeugs;
   d) Vergleich dieser bestimmten tatsächlichen Belastungen mit der Grenzlastdimensionierung und
   e) bei gleichen Belastungen Festlegung des angenommenen Wertes des Belastungskriteriums als zulässiger Wert, der dem Wert des Eingabeparameters entspricht, andernfalls erneute Durchführung der Schritte a) bis e) mit einem anderen angenommenen Wert des Belastungskriteriums.

5. Verfahren nach Anspruch 4, dadurch gekennzeichnet, daß das Entwicklungsgesetz der zulässigen Werte (Ciad) eines Belastungskriteriums (Ci) in Abhängigkeit von einem Eingabeparameter (Pi) die Form

$$Ciad = a3Pi^3 + a2Pi^2 + a1Pi + a0$$

hat, wobei in diesem Ausdruck a0, a1, a2 und a3 konstante Koeffizienten darstellen.

6. Verfahren nach Anspruch 4, dadurch gekennzeichnet, daß zur Bestimmung des Entwicklungsgesetzes der zulässigen Werte (Cjad) eines Belastungskriteriums (Cj) in Abhängigkeit von mehreren Eingabeparametern (P1, P2, ..., Pn) für verschiedene Wertekombinationen der Eingabeparameter (P1, P1, ..., Pn) der entsprechende zulässige Wert (Cjad) des Belastungskriteriums (Cj) ermittelt wird, indem für jede Kombination die Schritte a) bis e) durchgeführt werden, bei denen jeweils in das Landemodell die ausgewählten Werte aller Eingabeparameter (P1, P2, ..., Pm) eingegeben werden.

7. Verfahren nach Anspruch 6, dadurch gekennzeichnet, daß das Entwicklungsgesetz der zulässigen Werte (Cjad) eines Belastungskriteriums (Cj) in Abhängigkeit von Eingabeparametern (P1, P2, ..., Pn) die Form

$$Cjad = b1P1 + b2P2 + ... + bnPn$$

hat, wobei in diesem Ausdruck b1, b2, ..., bn konstante Koeffizienten darstellen.

8. Verfahren nach einem der Ansprüche 1 bis 7, dadurch gekennzeichnet, daß als Eingabeparameter (P1, P2, ..., Pn) mindestens einige der folgenden Parameter verwendet werden: Masse des Luftfahrzeugs, Schwerpunkt des Luftfahrzeugs, Beschleunigung zum Zeitpunkt der Landung, während der Landung aufgezeichnete Höchstbeschleunigung, Trimmlage des Flugzeugs, Durchsackgeschwindigkeit und Rollgeschwindigkeit.

9. Verfahren nach einem der Ansprüche 1 bis 8, dadurch gekennzeichnet, daß als Belastungskriterien (C1, C2, ..., Cp) mindestens einige der folgenden Kriterien verwendet werden: Vertikalgeschwindigkeit, Vertikalbeschleunigung, seitliche Beschleunigung und vertikale Belastung des Bugfahrwerks.

10. Vorrichtung (1) zur Anwendung des unter einem der Ansprüche 1 bis 9 beschriebenen Verfahrens, dadurch gekennzeichnet, daß sie umfaßt:

- eine erste Einheit (E1) von Sensoren (D1, D2, ..., Dn) zur Messung der Werte der Eingabeparameter (P1, P2, ..., Pn);
- eine zweite Einheit (E2) von Sensoren (F1, F2, ..., Fp) zur Messung der Werte (C1m, C2m, ..., Cpm) der Belastungskriterien (C1, C2, ..., Cp);
- einen mit der ersten Sensoreinheit (E1) verbundenen Rechner (CAL) mit den Entwicklungsgesetzen der zulässigen Werte der Belastungskriterien, an den die Meßwerte der Eingabeparameter (P1, P2, ..., Pn) gelangen und der die entsprechenden zulässigen Werte (C1ad, C2ad, ..., Cpad) der Belastungskriterien (C1, C2, ..., Cp) bestimmt, und
- eine Vergleichsvorrichtung (DC), die mit der zweiten Sensoreinheit (E2) und dem Rechner (CAL) verbunden ist und für jedes Belastungskriterium (C1, C2, ..., Cp) den tatsächlichen Meßwert (C1m, C2m, ..., Cpm) mit dem zulässigen Rechenwert (C1ad, C2ad, ..., Cpad) vergleicht, aus den Vergleichen bestimmt, ob eine Strukturinspektion durchgeführt werden muß und gegebenenfalls die Art der durchzuführenden Strukturinspektion angibt.

## Claims

1. Method for detecting that the design loads of an aircraft have been exceeded during landing, necessitating a structural inspection of the said aircraft being invoked, characterized in that:

   - in a preliminary step:

     • load criteria (C1, C2, ..., Cp) are defined, which are measurable on the aircraft and representative of the effective loads to which the aircraft is subjected; and
     • laws of variation of the allowable values (C1ad, C2ad, ..., Cpad) of these load criteria (C1, C2, ..., Cp) are determined as a function of input parameters (P1, P2, ..., Pn) measurable on the aircraft; and

   - at the moment of landing:

     • the values of the said input parameters (P1, P2, ..., Pn) and of the said load criteria (C1, C2, ..., Cp) are measured;

- on the basis of the said laws of variation and of the said measured values of the input parameters, the allowable values (C1ad, C2ad, ..., Cpad) of the said load criteria (C1, C2, ..., Cp) are calculated;
- for each of the said load criteria (C1, C2, ..., Cp), the measured effective value (C1m, C2m, ..., Cpm) is compared with the calculated allowable value (C1ad, C2ad, ..., Cpad); and
- on the basis of the result of the various comparisons, it is determined whether a structural inspection has to be carried out.

2. Method according to Claim 1, characterized in that, on the basis of the result of the various comparisons, the type of structural inspection to be carried out is determined as appropriate.

3. Method according to Claim 2, characterized in that, according to the type of structural inspection to be carried out, one or more of the following parts of the aircraft are checked: the nose landing gear, the main landing gear, the central landing gear, the wings, the fuselage and the engine pylons.

4. Method according to one of Claims 1 to 3, characterized in that, in order to determine the law of variation of the allowable values (Ciad) of a load criterion (Ci) as a function of an input parameter (Pi), the corresponding allowable value (Ciad) of the load criterion is sought for various values of the said input parameter (Pi), by carrying out the following steps, for each of the said various values of the input parameter:

a) an assumed value of the load criterion is chosen;
b) the said assumed value of the load criterion and the said value of the input parameter are inserted into a landing model;
c) with the aid of this landing model, the effective loads to which the aircraft is subjected are determined;
d) these effective loads determined are compared with the design limit loads; and
e) if the said loads are equal, the said assumed value of the load criterion is defined as allowable value, corresponding to the said value of the input parameter; otherwise, steps a) to e) are repeated, choosing a different assumed value of the load criterion.

5. Method according to Claim 4, characterized in that the law of variation of the allowable values (Ciad) of a load criterion (Ci), as a function of an input parameter (Pi), is of the form

$$Ciad = a3Pi^3 + a2Pi^2 + a1Pi + a0$$

an expression in which a0, a1, a2 and a3 represent constant coefficients.

6. Method according to Claim 4, characterized in that, in order to determine the law of variation of the allowable values (Cjad) of a load criterion (Cj), as a function of several input parameters (P1, P2, ..., Pn), the corresponding allowable value (Cjad) of the load criterion (Cj) is sought for different combinations of values of the said input parameters (P1, P2, ..., Pn), by carrying out the said steps a) to e), for each of the said combinations, for which the chosen values of all the said input parameters (P1, P2, ..., Pm) are input each time into the landing model.

7. Method according to Claim 6, characterized in that the law of variation of the allowable values (Cjad) of a load criterion (Cj), as a function of input parameters (P1, P2, ..., Pn), is of the form

$$Cjad = b1P1 + b2P2 + ... + bnPn$$

an expression in which b1, b2, ..., bn represent constant coefficients.

8. Method according to one of Claims 1 to 7, characterized in that, as input parameters (P1, P2, ..., Pn), at least some of the said following parameters are used: the mass of the aircraft, the centre of gravity of the aircraft, the acceleration at the moment of landing, the maximum acceleration recorded in the course of the landing, the attitude of the aircraft, the roll-off speed and the roll speed.

9. Method according to one of Claims 1 to 8, characterized in that, as load criteria (C1, C2, ..., Cp), at least some of the said following criteria are used: the vertical speed, the vertical acceleration, the lateral acceleration and the vertical load on the nose gear.

10. Device (1) for implementing the method specified under one of Claims 1 to 9, characterized in that it includes:

- a first set (E1) of sensors (D1, D2, ..., Dn) intended to measure the values of the said input parameters (P1, P2, ..., Pn);
- a second set (E2) of sensors (F1, F2, ..., Fp) intended to measure the values (C1m, C2m, ..., Cpm) of the said load criteria (C1, C2, ..., Cp);
- a computer (CAL) linked to the said first set (E1) of sensors, including the laws of variation of the allowable values of the load criteria, receiving the measured values of the input parameters (P1, P2, ..., Pn) and determining the corresponding allowable values (C1ad, C2ad, ..., Cpad) of the load criteria (C1, C2, ..., Cp); and

- a comparison device (DC), linked to the said second set (E2) of sensors and to the said computer (CAL), comparing the measured effective value (C1m, C2m, ..., Cpm), for each load criterion (C1, C2, ..., Cp), with the calculated allowable value (C1ad, C2ad, ..., Cpad), determining, from the said comparisons, whether a structural inspection has to be carried out and communicating the type of structural inspection to be carried out, as appropriate.

EP 0 657 723 B1

FIG.1

## FIG.2

## FIG.3

## FIG.4